# EUROPEAN PATENT SPECIFICATION

(11) **EP 2 192 796 B1**
(45) Date of publication and mention of the grant of the patent: **10.04.2013**
(21) Application number: 08800870.1
(22) Date of filing: 16.09.2008
(51) Int. Cl.: H04W 68/00

(54) **METHOD, DEVICE AND SYSTEM OF ENCAPSULATING PAGING MESSAGES INTO A PACKET**
VERFAHREN, EINRICHTUNG UND SYSTEM ZUM EINKAPSELN VON PAGING-NACHRICHTEN IN EIN PAKET
PROCÉDÉ, DISPOSITIF ET SYSTÈME D'ENCAPSULATION DE MESSAGES DE RECHERCHE DANS UN PAQUET

(30) Priority: 17.09.2007 CN 200710149848
(43) Date of publication of application: 02.06.2010
(73) Proprietor: Huawei Technologies Co., Ltd., Longgang District, Shenzhen Guangdong 518129 (CN)
(72) Inventor: HU, Zhanfeng, Shenzhen Guangdong 518129 (CN)
(74) Representative: Isarpatent
(86) International application number: PCT/CN2008/072374
(87) International publication number: WO 2009/036696

(56) References cited:
- CN-A- 1 925 689
- CN-A- 101 227 732
- JP-A- 2005 005 967
- US-A1- 2006 262 766
- '3GPP 3rd Generation Partnership Project; Technical Specification Group Radio Access Network; Radio Resource Control (RRC); Protocol Specification (Release 7)' 3GPP TS 25.331 V7.5.0 June 2007, pages 475 - 476

## Description

### FIELD OF THE TECHNOLOGY

The present invention relates to the field of communication technology, and more particularly to a method, a device, and a system of encapsulating paging messages into a packet.

### BACKGROUND OF THE INVENTION

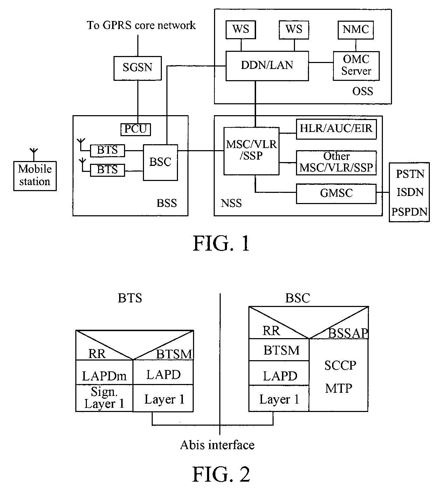

Along with the development of the mobile communication technology, the global system for mobile communications (GSM) network system has become the most widely used wireless communication system in the current world, and the number of subscribers of the system is continuously increased. A deployment of network elements (NEs) of the existing GSM system is as shown in FIG. 1. In FIG. 1, an interface between a base station controller (BSC) and a base transceiver station (BTS, or called a base station) is referred to as the Abis interface, the interface adopts a link access protocol on a D-channel (LAPD) communication protocol. The Abis interface protocol stack is as shown in FIG. 2, in which the BTSM is a base transceiver station management, the RR is a radio resource management, the LAPD is a link access protocol on the D-channel, the LAPDm is a link access protocol on a Dm channel, the BSSAP is a base station subsystem application part, the SCCP is a signaling connection control part, and the MTP is a message transfer part.

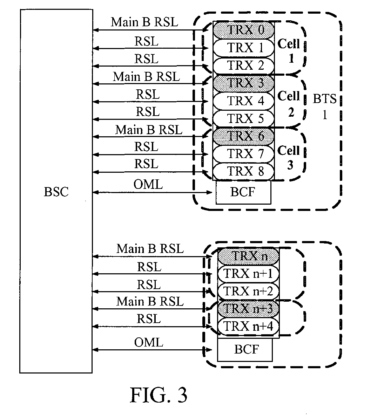

A BTS is referred to as a base station, one or more cells may be configured in each base station, and one or more transceivers (TRXs) may be configured in each cell. Each TRX performs a process of sending and receiving a signaling service message with the BSC through an LAPD link, and each base station performs a process of sending and receiving an operation and maintenance signaling of the whole base station with the BSC through a LAPD link. Usually, the LAPD link used for operation and maintenance communication is called an operation and maintenance link (OML) link, and the LAPD link adapted for the signaling communication is called a radio signaling link (RSL) link. In a cell, a TRX having a main broadcasting control channel (BCCH) is called the main B TRX of the cell, and the RSL link used for the service interaction between the main B TRX and the BSC is called the main B RSL link of the current cell. Configuration relations of the stations, the cells, the TRXs, the RSL links, and the OML links are as shown in FIG. 3. The TRXs with gray identities are the main B TRXs. A base control function (BCF) processes the base control function in the BTS, for example, the BCF may be a functional entity of BTS initialization, software download, channel configuration, and operation and maintenance, etc.

In the GSM system, in order to decrease the resource waste, a concept of location area (LA) is introduced. One LA includes one cell group, and one mobile station (MS) belongs to one LA at a certain moment. When a subscriber (calling subscriber) of the network or other network calls a certain mobile subscriber (called subscriber) in a current mobile switching center (MSC), the MSC sends paging messages to all the cells in the LA according to the registered LA of the called subscriber. The paging message includes an international mobile subscriber identity (IMSI) or a temporary mobile subscriber identity (TMSI) through which the identity of the subscriber may be identified. The MSC determines the BTS need to be paged according to the LA, and sends a paging instruction to the BTS. The BTS sends the paging messages of the called MS on a specified paging channel (PCH), so as to notify the called subscriber to get access to the network.

During a process of realizing the present invention, the inventor finds that the relevant technique at least has the problems as follows.

In the relevant paging technique, the paging messages are sent to all cells in the BSC, so that the downlink load of a link for transmitting the paging messages of the Abis interface is quite heavy, thus seriously affecting a stability of the BSC system and the reliability of services. Particularly under a network situation of a traffic peak time or when the traffic instantaneously rises, the downlink of delivering the paging messages in the BSC may be possibly congested, so that a great number of paging messages are dropped, so the MSC may retransmit a great number of paging messages or initiates a whole network paging, thus resulting in the further congestion of the downlinks of the Abis interfaces of all the cells in the current LA. Therefore, the traffic capacity of the BSC is reduced, and even the called service cannot be performed at all.

JP2005005967 A discloses a paging multiplexing method. In this method, when an RNC I sends the paging to call an UE 3 at the terminate side, it transfers paging data with a massage name "Paging TYPE 1" without multiplexing in an RRC protocol to an RLC protocol of a lower layer. To transfer the paging data in an unacknowledged transfer mode (UM) in the RLC protocol, it stores a plurality of paging data in one RLC-PDU to assemble a UM-PDU, multiplexes the data with taking the UM-PDU for one TB, and transfers them to an MAC protocol/FP. The FP determines the sending timing, and sends the multiplexed TB to a Node B2 at the determined timing.

US2006/0262766 A1 relates to a method and corresponding device for improved bandwidth utilization. Optimized transmission of information packets on a backhaul connection is realized, by concatenating few VoIP packets into a big packet with optional internal header compression. The concatenated packets are transmitted efficiently through the backhaul channel and rearranged at the receiving side.

### SUMMARY OF THE INVENTION

The embodiments of the present invention are directed to a method, a device, and a system of encapsulating paging messages into a packet.

An embodiment of the present invention provides a method of encapsulating paging messages into a packet as disclosed in claim 1.

Another embodiment of the present invention provides a BSC as disclosed in claim 6.

Still another embodiment of the embodiment of the present invention provides a BSS as disclosed in claim 10.

As compared with the prior art, the present invention has efficacies as follows. Through the present invention, the paging messages delivered to the base station are encapsulated into a packet, thereby decreasing the number of the paging messages sent on a downlink signaling link of an Abis interface, and decreasing the occupied downlink load, so as to decrease or even prevent a congestion of the downlink signaling link of the Abis interface resulting from the paging messages.

### BRIEF DESCRIPTION OF THE DRAWINGS

In order to clearly and fully describe the technical solutions of the present invention or the prior art, the accompanying drawings used in the description of the embodiment or the prior art are briefly introduced. It is obvious that the accompanying drawings to be described are only a part rather than all of the embodiments of the present invention. Other accompanying drawings may be obtained by those skilled in the art based on the accompanying drawings without carrying out creative activities.
FIG. 1 is a deployment of NEs of a GSM system in the prior art;
FIG. 2 is a schematic view of an Abis interface protocol stack in the prior art;
FIG. 3 is a schematic view of configuration relations of stations, cells, TRXs, RSL links, and OML links in the prior art;
FIG. 4 is a schematic view of a process of distributing paging messages in the prior art;
FIG. 5 is a structural view of a BSC according to an embodiment of the present invention;
FIG. 6 is a schematic view of encapsulating according to cells according to an embodiment of the present invention;
FIG. 7 is a schematic view of encapsulating according to stations according to an embodiment of the present invention;
FIG. 8 is a flow chart of a method of encapsulating paging messages into a packet according to an embodiment of the present invention;
FIG. 9 is a flow chart of an embodiment of the method of encapsulating the paging messages into the packet according to the present invention;
FIG. 10 is a schematic view of a system configuration according to an embodiment of the present invention;
FIG. 11 is a schematic view of a relation between paging message encapsulating conditions and the paging message encapsulating according to an embodiment of the present invention;
FIG. 12 is a schematic view of encapsulating the paging messages according to the cells according to an embodiment of the present invention; and
FIG. 13 is a flow chart of another embodiment of the method of encapsulating the paging messages into the packet according to an embodiment of the present invention.

### DETAILED DESCRIPTION OF THE EMBODIMENTS

The technical schemes of the present invention will be described clearly and completely with the accompanying drawings in the embodiments of the present invention. It is obvious that the provided embodiments are merely a part of and not the whole of the embodiments of the present invention. Based on the embodiments of the present invention, other embodiments obtained by those of ordinary skill in the art without making creative efforts all fall within the scope of the invention.

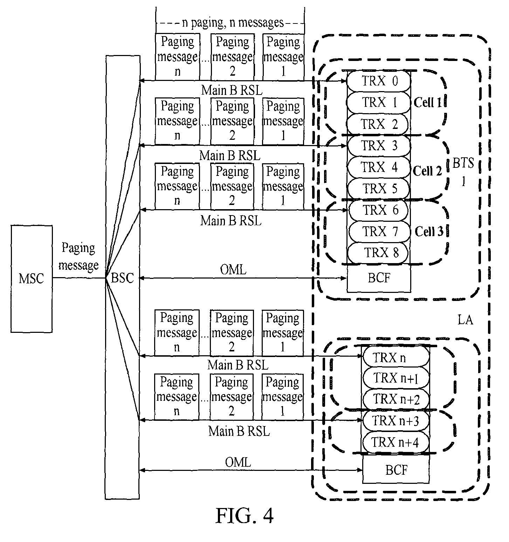

It is found by the inventor through analysis that in relevant techniques, paging messages are sent from a BSC to a base station by using a cell as a unit. That is to say, if a plurality of cells exists in a current LA, for each cell, the BSC sends one paging message to the base station through a main B RSL of the cell, and a process of distributing the paging messages is as shown in FIG. 4. In FIG. 4, an MSC continuously sends n paging messages in the current LA, so as to page n called subscribers, and the BSC sends the paging messages to the base station according to the cells in the LA. When the MSC sends one paging message to the BSC (paging according to the LA), the BSC then sends the paging messages to the base station in a number the same as that of the cells in the LA (assigned by the MSC in the paging message sent to the BSC) under the BSC, so as to page the same called user. All the paging messages are sent through the main B RSL links of the target cells. When the MSC pages a plurality of subscribers in sequence, the paging messages are sent in sequence from the BSC to the base station on the main B RSL links of the target cells.

In an embodiment, the present invention provides a method of encapsulating paging messages into a packet. Through the embodiment of the present invention, the paging messages delivered to the base station are encapsulated on the Abis interface between the BSC and the base station according to the cells or the stations, or firstly cells and then stations, thereby decreasing the number of the paging messages on a downlink signaling link of the Abis interface, and decreasing an occupied downlink load, so as to reduce or even prevent a congestion of the downlink signaling link of the Abis interface resulting from the paging messages.

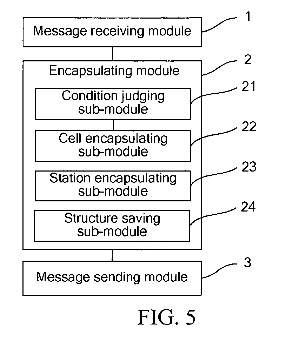

FIG. 5 is a structural view of the BSC according to an embodiment of the present invention. Referring to FIG. 5, the BSC includes a message receiving module 1, an encapsulating module 2, and a message sending module 3. The message receiving module 1 is configured to receive the paging messages sent from the MSC. The encapsulating module 2 is connected to the message receiving module 1, and is configured to encapsulate on the paging messages received by the message receiving module 1 according to a preset encapsulating structure. The message sending module 3 is connected to the encapsulating module 2, and is configured to send the paging messages after being processed by the encapsulating module 2 to the base station.

In the embodiment of the present invention, the received paging messages may be encapsulated according to the cells, or the received paging messages may be encapsulated according to the stations, or the received paging messages may be encapsulated firstly according to the cells and then according to the stations.

Before the received paging messages are encapsulated according to the cells, the encapsulating module 2 judges whether the paging message satisfies an encapsulating condition, and if it is judged that the paging message satisfies the encapsulating condition, the encapsulating module 2 encapsulates the paging message according to the cells. The encapsulating condition may have various setting manners, for example, whether the number of the paging messages reaches the maximum number of the buffered paging messages, or whether a buffer time of the paging message reaches a longest time when the paging message is buffered in the BSC, and as long as the paging message satisfies any one of the encapsulating conditions, the encapsulating module 2 may perform the encapsulation process on the paging message according to the cells.

After the encapsulating module 2 encapsulates the received paging messages according to the stations, for the paging messages from the MSC to a plurality of subscribers in the same cell or a certain subscriber in the same LA, the message sending module 3 only needs to send one paging message to the base station, and the base station sends the paging message to each cell in the base station.

Preferably, the BSC further includes a load judging module configured to judge whether a system load exceeds a preset load threshold value before the encapsulating module 2 encapsulates the paging messages. If the load judging module judges that the current system load exceeds the preset load threshold value, the encapsulating module encapsulates the paging messages. If the load judging module judges that the current system load does not exceed the preset load threshold value, the paging messages are processed according to the existing manner of processing the paging messages. The system load includes the system loads of the BSCs, BTSs, or BSSs, or a downlink load etc.

Referring to FIG. 5, the encapsulating module 2 includes a condition judging sub-module 21, a cell encapsulating sub-module 22, and a station encapsulating sub-module 23.

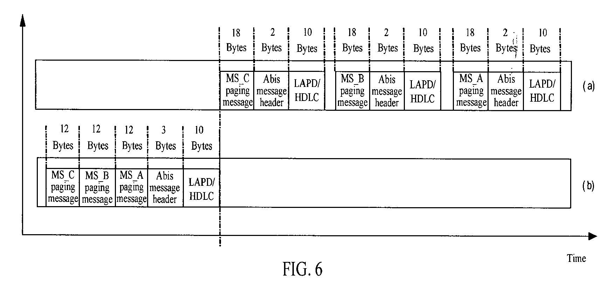

The condition judging sub-module 21 is configured to judge whether the paging message satisfies the paging message encapsulating condition. The encapsulating condition may have various setting manners, for example, whether the number of the paging messages reaches the maximum number of the buffered paging messages, or whether the buffer time of the paging message reaches the longest time when the paging message is buffered in the BSC, and as long as the paging message satisfies any one of the encapsulating conditions, the condition judging sub-module 21 judges that the paging message satisfies the paging message encapsulating condition. The cell encapsulating sub-module 22 is configured to encapsulate the paging messages of the plurality of subscribers in the same cell in an predetermined time into a self-defined expanded paging message at the Abis interface, after the condition judging sub-module 21 judges that the paging messages satisfy the paging message encapsulating condition, and send the self-defined expanded paging message to the base station for being processed. FIG. 6(a) is a schematic view of a paging delivering link before the paging messages are encapsulated, and FIG. 6(b) is a schematic view of the paging delivering link after the paging messages are encapsulated. Referring to FIG. 6, after the paging messages are encapsulated according to the cells, on the link of delivering the paging messages, not only the number of the paging messages is decreased relative to the original situation, but also a payload, including a paging message content and a lower layer protocol unit content, of the paging message on the link after the paging messages are encapsulated may be much less that a sum of the payloads of all the paging messages sent on the link before the paging messages are encapsulated.

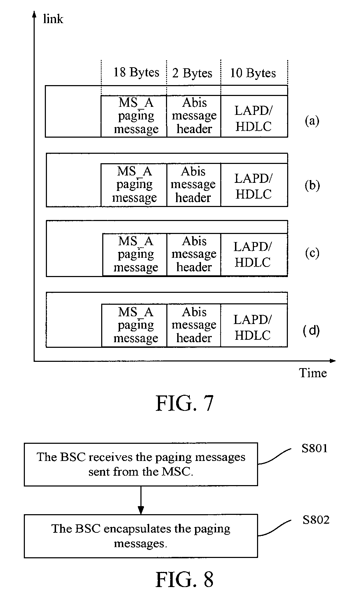

Referring to FIG. 5, the station encapsulating sub-module 23 is configured to encapsulate the paging messages received by the message receiving module 1 according to the stations. Before the paging messages are encapsulated, for the plurality of cells of one station, when receiving one paging message from the MSC, the BSC sends one paging message to all the cells of the station. After the station encapsulating sub-module 23 encapsulates the paging messages according to the stations, the message sending module 3 encapsulates the paging messages of the plurality of cells of the same station into one paging message, and sends the paging message to the base station. The base station distributes the paging message according to each cell, as shown in FIG. 7. FIG. 7(a) is the paging delivering link of a CELL1 before the paging messages are encapsulated, FIG. 7(b) is the paging delivering link of a CELL2 before the paging messages are encapsulated, FIG. 7(c) is the paging delivering link of a CELLn before the paging messages are encapsulated, and FIG. 7(d) is the paging delivering link of the base station after the paging messages are encapsulated, in which MS_A in FIG. 7 represents the paged called subscriber, and the CELL1-CELLn are n cells of the same base station.

Referring to FIG. 7, before the paging messages are encapsulated according to the stations, for the paging message sent from the MSC to the same subscriber, for example, MS_A, one paging message is sent on each paging delivering link of the CELL1-CELLn to the base station, and totally n messages are sent to the base station. After the station encapsulating sub-module 23 encapsulates the paging messages according to the stations, for the paging message sent from the MSC to the same subscriber, for example, MS_A, the BSC only needs to send one paging message to the base station, and then the base station sends the paging message to each cell in the base station through an air interface. The signaling link on which the encapsulated paging messages are sent on the Abis interface may be one or more in the n links of the CELL1-CELLn, or the n links are alternately used, or the links shares the load, or OML links are used, or self-defined links are used etc.

Preferably, the encapsulating module 2 further includes a structure saving sub-module 24, which is configured to store the preset encapsulating structure, and the encapsulating structure may be applicable for the situation that the paging messages are encapsulated according to the cells. In the embodiment of the present invention, the self-defined encapsulating structure of the Abis interface is as shown in Table 1.

**Table 1**

| Cell | Index | Existing State | Format | Length | Self-defined Value |
|---|---|---|---|---|---|
| Message discriminator | 3GPP 480589.1 | M | V | 1 | 0xAA |
| Message type | 3GPP 480589.2 | M | V | 1 | 0x18 |
| Paging Package Number | Self-defined | M | V | 1 | |
| Paging Package | Self defined | M | V | 16-240 | |

The definition of Paging Package Number is as shown in Table 2.

**Table 2**

| 8 | 7 | 6 | 5 | 4 | 3 | 2 | 1 | |
|---|---|---|---|---|---|---|---|---|
| SPARE | | | | Paging Msg Number | | | | 1 |

The definition of Paging Package is as shown in Table 3.

**Table 3**

| 8 | 7 | 6 | 5 | 4 | 3 | 2 | 1 | |
|---|---|---|---|---|---|---|---|---|
| Paging Package Info(1) | | | | | | | | 1 |
| Paging Package Info(2) | | | | | | | | M |
| | | | | | | | | |
| Paging Package Info(N) | | | | | | | | N |

The definition of Paging Package Info is as shown in Table 4.

**Table 4**

| | | | | |
|---|---|---|---|---|
| Channel And eMLPP | Self-defined | M | V | 1 |
| MS Identity | 3GPP 48058 9.3.12 | M | TLV | 2-10 |
| Paging Group Paras | Self-defined | M | V | |

The definition of Channel and eMLPP is as shown in Table 5.

**Table 5**

| 8 | 7 | 6 | 5 | 4 | 3 | 2 | 1 | |
|---|---|---|---|---|---|---|---|---|
| Channel Number | | | Channel Needed | | eMLPP Priority | | | 1 |

The definition of Paging Group Paras is as shown in Table 6.

**Table 6**

| 8 | 7 | 6 | 5 | 4 | 3 | 2 | 1 | |
|---|---|---|---|---|---|---|---|---|
| Paging Type | CS Paging Group | | | | | | | 1 |
| PS Paging Group Para1 | | | | | | | | The four parameters only exist when Paging Type=1. |
| PS Paging Group Para2 | | | | | | | | |
| PS Paging Group Para3 | | | | | | | | |
| PS Paging Group Para4 | | | | | | | | |

Paging Group Paras is a variable structure. According to whether the current paging is a circuit switched (CS) domain paging or a packet switched (PS) domain paging, different structural defines are adopted. For example, when Paging Type=0, the structure is as shown in Table 7, and a structural length is 1 byte.

**Table 7**

| 8 | 7 | 6 | 5 | 4 | 3 | 2 | 1 | |
|---|---|---|---|---|---|---|---|---|
| 0 | CS Paging Group | | | | | | | 1 |

When Paging Type=1, the structure is as shown in Table 8, and the structural length is 5 bytes.

**Table 8**

| 8 | 7 | 6 | 5 | 4 | 3 | 2 | 1 | |
|---|---|---|---|---|---|---|---|---|
| 1 | SPARE | | | | | | | 1 |
| PS Paging Group Para1 | | | | | | | | 2 |
| PS Paging Group Para2 | | | | | | | | 3 |
| PS Paging Group Para3 | | | | | | | | 4 |
| PS Paging Group Para4 | | | | | | | | 5 |

The definitions of the cell parameters in Table 1-Table 8 are as shown in Table 9. Chapters cited in Table 9 refer to the corresponding chapters in a 3GPP 48.058 V4.0.0 protocol, for example, "9.3.14" in Table 9 refers to chapter 9.3.14 in the 3GPP 48.058 V4.0.0 protocol.

**Table 9**

| Name of Parameter | Span | Description of Parameter |
|---|---|---|
| Paging Msg Number | 1-15 | Amount of the "Paging Package Info" structures in the paging encapsulating message |
| Paging Package Info | Self-defined Structure | A structural definition of a single paging message in the paging encapsulating message |
| Paging Group Paras | Self-defined Structure | Corresponding paging group parameters are carried in subsequent bytes according to whether the current paging is the CS paging or the PS paging in the "paging packet". |
| Paging Group | 0-80 | A paging group, the values of the Paging Group in 9.3.14 (without the IE identity) |
| Channel Number | 0-7 | The "Downlink CCCH (PCH + AGCH)" part in 9.3.1 |
| Channel Needed | 0-4 (0 is filled when invalid) | The "Channel" part in 9.3.40 "Channel Needed" is optional, and 0 is filled when invalid. |
| eMLPP Priority | 0-7 (0 is filled when invalid) | The "call priority" part in 9.3.49. "eMLPP Priority" is optional, and 0 is filled when invalid. |

FIG. 8 is a flow chart of the method of encapsulating the paging messages into the packet according to an embodiment of the present invention. Referring to FIG. 8, the method includes the steps as follows.

In step S801, the BSC receives the paging messages sent from the MSC.

In step S802, the BSC encapsulates the paging messages. After receiving the paging messages sent from the MSC, the BSC encapsulates the paging messages. In the embodiment of the present invention, three encapsulating manners are provided, in which the received paging messages may be encapsulated according to the cells, or the received paging messages may be encapsulated according to the stations, or the received paging messages may be encapsulated firstly according to the cells and then according to the stations.

Before the received paging messages are encapsulated according to the cells, the BSC judges whether the paging message satisfies the encapsulating condition, and if it is judged that the paging message satisfies the encapsulating condition, the BSC encapsulates the paging message according to the cells. The encapsulating condition may have various setting manners, for example, whether the number of the paging messages reaches the maximum number of the buffered paging messages, or whether the buffer time of the paging message reaches the longest time when the paging message is buffered in the BSC, and as long as the paging message satisfies any one of the encapsulating condition, the BSC may perform the encapsulation process on the paging messages according to the cells. When the received paging messages are encapsulated according to the cells, the paging messages of the plurality of subscribers in the same cell are encapsulated into the self-defined expanded paging message in the predetermined time at the Abis interface, and the self-defined expanded paging message is sent to the BTS for being processed, as shown in FIG. 6. FIG. 6(a) is a schematic view of the paging delivering link before the paging messages are encapsulated, and FIG. 6(b) is a schematic view of the paging delivering link after the paging messages are encapsulated. Referring to FIG. 6, after the paging messages are encapsulated according to the cells, on the link of delivering the paging messages, not only the number of the paging messages is decreased relative to the original situation, but also the payload, including the paging message content and the lower layer protocol unit content, of the paging message on the link after the paging messages are encapsulated may be much less that the sum of the payloads of all the paging messages sent on the link before the paging messages are encapsulated. Preferably, the BSC saves the preset encapsulating structure, and the encapsulating structure is as shown in Table 1-Table 9. When encapsulating the paging messages according to the cells, the BSC encapsulates the paging messages according to the preset encapsulating structure.

Before the BSC encapsulates the paging messages according to the stations, for the plurality of cells of one station, when receiving one paging message from the MSC, the BSC sends one paging message to all the cells of the station. After the paging messages are encapsulated, the BSC encapsulates the paging messages of the plurality of cells of the same station into one paging message, and sends the paging message to the base station. The base station distributes the paging message according to each cell, as shown in FIG. 7. FIG. 7(a) is the paging delivering link of the CELL1 before the paging messages are encapsulated, FIG. 7(b) is the paging delivering link of the CELL2 before the paging messages are encapsulated, FIG. 7(c) is the paging delivering link of the CELLn before the paging messages are encapsulated, and FIG. 7(d) is the paging delivering link of the base station after the paging messages are encapsulated, in which MS_A in FIG. 7 represents the paged called subscriber, and the CELL1-CELLn are n cells of the same base station. Referring to FIG. 7, before the paging messages are encapsulated according to the stations, for the paging message sent from the MSC to the same subscriber, for example, MS_A, one paging message is sent on each paging delivering link of the CELL1-CELLn to the base station, and totally n messages are sent to the base station. After the paging messages are encapsulated according to the stations, for the paging message sent from the MSC to the same subscriber, for example, MS_A, the BSC only needs to send one paging message to the base station, and then the base station sends the paging message to each cell in the base station through the air interface. The signaling link on which the encapsulated paging messages are sent on the Abis interface may be one or more in the n links of the CELL1-CELLn, or the n links are alternately used, or the links shares the load, or OML links are used, or self-defined links are used etc.

The two types of the encapsulating manners may be separately used or used together. For example, the received paging messages may be encapsulated firstly according to the cells and then according to the stations, that is, the BSC encapsulates the received paging messages firstly in an encapsulating manner according to the cells, and then encapsulates the paging messages encapsulated according to the cells in an encapsulating manner according to the stations.

Preferably, before encapsulating the paging messages, the BSC firstly judges whether the system load exceeds the preset load threshold value. If the current system load exceeds the preset load threshold value, the BSC encapsulates the paging messages. If the current system load does not exceed the preset load threshold value, the paging messages are processed according to the existing manner of processing the paging messages. The system load includes the system loads of the BSCs, BTSs, or BSSs, or the downlink load etc.

In addition, by reason of the application of the technique as follows, the number of the TRXs configured in the same cell is increased, or the traffic of the same cell is increased, so that the called subscribers are increased, the paging messages of the same cell in a unit time is increased, and the downlink load of delivering the paging messages of the cell is increased as well.

The expanded BCCH is applied. After the expanded BCCH is used, a paging capacity of the air interface is increased, and the possibility of the congestion of the paging at the air interface is reduced, so that the operator further increases the traffic of the cell.

The transferring of the Abis interface is optimized or uses an internet protocol (IP) technology. Under this situation, the number of the TRXs supported by the BTS under one physical transferring is increased, even 24 TRXs are configured in the same cell, so that the traffic of the cell is further increased, thereby directly or indirectly increasing the load of the paging messages.

Under the situation that the GSM technique is continuously developed, the large-scale base station is continuously applied, and accordingly the traffic of each cell is increased, so that the number of the paging from the current cell to the subscribers is increased, thereby further increasing the proportion of the load of the paging messages on the downlink.

In the method of encapsulating the paging messages into the packet according to the embodiment of the present invention, the BSC encapsulates the paging messages delivered to the base station based on the preset paging structure according to the cells or according to the stations or firstly according to the cells and then according to the stations, thereby decreasing the number of the paging messages on the downlink of the Abis interface, and reducing the occupied downlink load, so as to reduce or even prevent the congestion of the downlink signaling link of the Abis interface resulting from the paging messages.

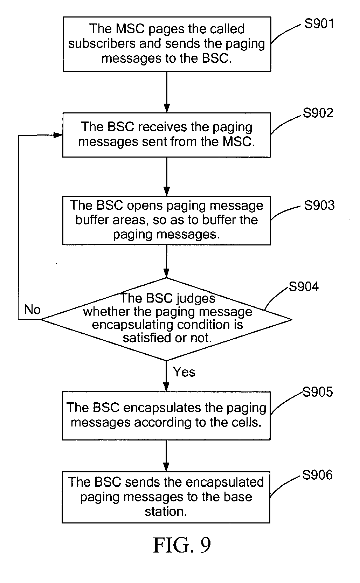

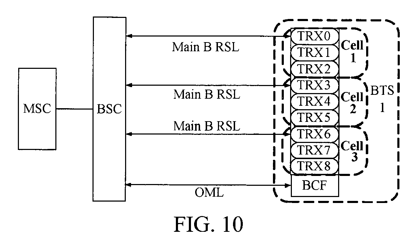

FIG. 9 is a flow chart of the method of encapsulating the paging messages into the packet according to the embodiment of the present invention. Referring to FIG. 9, an assumed environment of the embodiment, in which the BSC encapsulates the paging messages according to the cells, is configured as a GSM system including a MSC, a BSC, and a base station BTS1. Three cells (CEL1, CELL2, and CELL3) are configured in the base station, three TRXs are configured in each cell, and the schematic view is as shown in FIG. 10. The configuration of the assumed environment is only for the description of the relevant technique problems, instead of limiting the scope of the technical solution of the present invention. In the practical application, the configuration of multi-MSC, multi-BSC, multi-BTS, multi-CELL, and multi-TRX environment may be obtained through deduction, and the description thereof is not repeated herein.

The two preset encapsulating conditions of this embodiment are as follows.
(1) It is judged whether the number of the paging messages reaches the maximum number of the buffered paging messages, and the number of the maximally buffered paging messages is set to be N.
(2) It is judged whether the buffer time of the paging message reaches the longest time when the paging message is buffered in the BSC, and the longest time is set to be T milliseconds (ms).

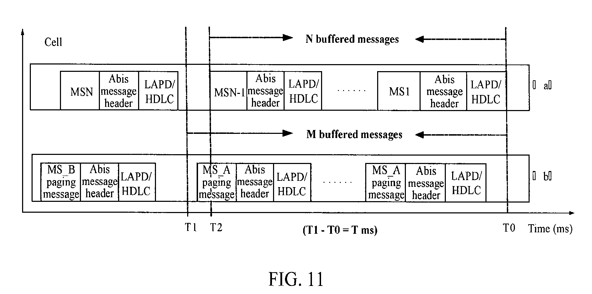

Under the situation that the paging messages exist in the current cell and are buffered in the BSC, as long as the any one of the encapsulating conditions is satisfied, the BSC encapsulates one paging message and sends the paging message to the base station. A relation between the paging message encapsulating condition and the paging messages encapsulating is as shown in FIG. 11.

In the description of the embodiments, for ease of description, it is assumed that N=8 and T=100 ms when the paging messages are encapsulated according to the cells in the current system. Particularly, the method includes the steps as follows.

In step S901, the MSC pages the called subscribers and sends the paging messages to the BSC. The MSC pages the called subscribers, and sends 9 paging messages in succession to the BSC of the current LA in a certain time, so as to respectively page 9 subscribers, MS1, MS2...MS9.

In step S902, the BSC receives the paging messages sent from the MSC.

In step S903, the BSC opens paging message buffer areas, so as to buffer the paging messages. After receiving the paging messages from the MSC, the BSC respectively open one paging message buffer area for each cell which needs to deliver the paging messages, so as to buffer the paging messages to be sent to the cells.

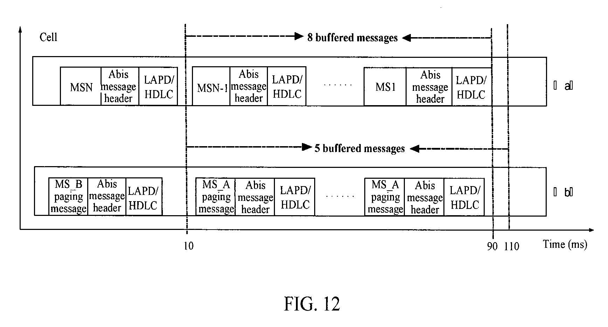

In step S904, the BSC judges whether the paging message encapsulating condition is satisfied. Before encapsulating the paging messages sent to the cells according to the cells, the BSC firstly judges whether the paging messages satisfy the paging message encapsulating condition. In this embodiment, the paging message encapsulating condition is whether the number of the paging messages reaches the maximum number of the buffered paging messages or whether the buffer time of the paging messages reaches the longest time when the paging messages are buffered in the BSC. As long as one condition is satisfied, the BSC encapsulates the paging messages according to the cells. If the paging messages do not satisfy the paging message encapsulating condition, the procedure returns to step S902, and the BSC continues to receive the paging messages sent from the MSC. FIG. 12 is a schematic view of the paging message buffer area of the cell CELL1 in the BSC. Referring to FIG. 12, the judging process of the BSC is described below by setting the CELL1 as an example.
(1) In the configured T ms, the number of the paging messages buffered in the CELL1 reaches the configured N value. Referring to FIG. 12(a), in a time segment of 80 ms from 10 ms to 90 ms of the system, which is smaller than the configured T value (100 ms), the cell CELL1 continuously receives 8 paging messages, so that the maximum number N (N is configured to be 8 here) of the buffer paging messages configured by the system is reached, the BSC encapsulates a self-defined paging message on the CELL1, and the paging message includes the paging messages of 8 subscribers.
(2) In the configured T ms, the number of the paging messages buffered in the CELL1 does not reach the configured N value. Referring to FIG. 12(b), in a time segment of 100 ms from 10 ms to 90 ms of the system, which reaches the T value (100 ms) configured by the system, the cell CELL1 only receives 5 paging messages, the configured time limit of the T value is reached, so that the BSC encapsulates a self-defined paging message on the CELL1, and the paging message includes the paging messages of 5 subscribers.

In step S905, the BSC encapsulates the paging messages according to the cells. After judging that the paging messages received from the MSC satisfy the paging message encapsulating condition, the BSC encapsulates the paging messages according to the cells. Preferably, the BSC saves the preset encapsulating structure, and the encapsulating structure is as shown in Table 1-Table 9. When encapsulating the paging messages according to the cells, the BSC encapsulates the paging messages according to the preset encapsulating structure. Preferably, before encapsulating the paging messages according to the cells, the BSC firstly judges whether the system load exceeds the preset load threshold value. If the current system load exceeds the preset load threshold value, the BSC encapsulates the paging messages. If the current system load does not exceed the preset load threshold value, the BSC does not encapsulate the paging messages according to the cells, and the paging messages are processed according to the existing manner of processing the paging messages. The system load includes the system loads of the BSCs, BTSs, or BSSs, or the downlink load etc.

In step S906, the BSC sends the encapsulated paging messages to the base station. Referring to FIG. 12(a), the BSC paging message including the paging messages of 8 subscribers is sent to the base station through the main B RSL link of the CELL1. Alternatively, referring to FIG. 12(b), the BSC paging message including the paging messages of 5 subscribers is sent to the base station through the main B RSL link of the CELL1.

The link optimization calculation when the paging messages are encapsulated according to the cells is shown as follows.

For the parameter configuration, the number of the paging messages received by the cell CELL1 are 120 per second, and the paging messages encapsulating parameters are N=8, and T=100 ms.

Under the original message mode, the number of the sent messages is 120 per second.

A signaling link flow is 120 messages*(LAPD/high-level data link control (HDLC)) protocol unit 10 bytes+the length of the paging message being 20 bytes)=3600 bytes.

Under the optimization solution when the messages are encapsulated according to the cells, the number of the sent messages is 120/8=15 per second.

The signaling link flow is 15*(LAPD/HDLC protocol unit 10 bytes+Abis header 3 bytes+the length of the paging messages in the packet being 12 byte*8 pagings/packet)=1635 bytes.

**Comparison Table:**

| | | Abis layer three-layer message speed (per second) | Abis layer three-layer data speed (byte/second) | Message speed ratio (original/optimized) | Data speed ratio (original/optimized) |
|---|---|---|---|---|---|
| Original Call | | 120 | 3600 | 15/120=12.5% | 1635/3600 =45.4% |
| Paging Packet | | 15 | 1635 | | |
| Description: | | | | | |
| | The number of the messages and the number of the bytes borne on the RSL link are greatly reduced. | | | | |
| | Under the situation of the large traffic, the number (M) of the paging in the encapsulated message is increased, thereby improving the system performance. | | | | |
| | The number of the three-layer messages of the Abis interface layer is decreased, and the number of sending and confirming messages of the LAPD. | | | | |

Description: the LAPD/HDLC protocol unit being 10 bytes refers to the number of bytes of the headers of the protocols and the number of bytes of the tails of the protocols needed when the LAPD and the HDLC protocols bear and transfer the paging. The length of the paging message being 20 bytes refers to the maximal length of one Abis interface paging message defined in the 3GPP 48058 protocol.

In the method of encapsulating the paging messages into the packet, the BSC encapsulates the paging messages sent from the MSC according to the preset encapsulating condition according to the cells, thereby decreasing the number of the paging messages on the downlink of the Abis and the total length of the messages, so as to reduce the downlink load of the signaling link of the Abis interface of delivering the paging messages.

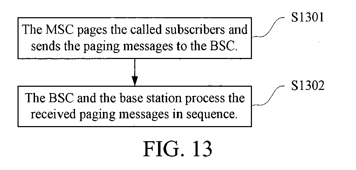

FIG. 13 is a flow chart of the method of encapsulating the paging messages into the packet according to another embodiment of the present invention. Referring to FIG. 13, an assumed environment of the embodiment, in which the BSC encapsulates the paging messages according to the stations, is configured as a GSM system including a MSC, a BSC, and a base station BTS1. Three cells (CEL1, CELL2, and CELL3) are configured in the base station, three TRXs are configured in each cell, and the schematic view is as shown in FIG. 10. The configuration of the assumed environment is only for the description of the relevant technique problems, instead of limiting the scope of the technical solution of the present invention. In the practical application, the configuration of multi-MSC, multi-BSC, multi-BTS, multi-CELL, and multi-TRX environment may be obtained through deduction, and the description thereof is not repeated herein.

Particularly, the method includes the following steps.

In step S 1301, the MSC pages the called subscribers and sends the paging messages to the BSC. The MSC pages the called subscribers, and sends 5 paging messages in succession to the BSC of the current LA in a certain time, so as to respectively page 5 subscribers, MS1, MS2...MS5.

In step S1302, the BSC and the base station process the received paging messages in sequence. After receiving the paging messages from the MSC, the BSC and the BTS process the received paging messages for paging 5 subscribers MS1, MS2...MS5 in sequence.
(1) After receiving the paging message from the MS1, the BSC sends the paging message to the base station through the RSL (main BRSL) on the TRX0 of the current CELL1, and does not send the paging message to the other cells. After receiving the paging message for the MS1, the base station forwards the paging message to the other cells in the station through the air interface.
(2) After receiving the paging message from the MS2, the BSC sends the paging message to the base station through the RSL (main BRSL) on the TRX3 of the current CELL2, and does not send the paging message to the other cells. After receiving the paging message for the MS2, the base station forwards the paging message to the other cells in the station through the air interface.
(3) After receiving the paging message from the MS3, the BSC sends the paging message to the base station through the RSL (main BRSL) on the TRX6 of the current CELL3, and does not send the paging message to the other cells. After receiving the paging message for the MS3, the base station forwards the paging message to the other cells in the station through the air interface.
(4) After receiving the paging message from the MS4, the BSC sends the paging message to the base station through the RSL (main BRSL) on the TRX0 of the current CELL1, and does not send the paging message to the other cells. After receiving the paging message for the MS4, the base station forwards the paging message to the other cells in the station through the air interface.
(5) After receiving the paging message from the MS5, the BSC sends the paging message to the base station through the RSL (main BRSL) on the TRX3 of the current CELL2, and does not send the paging message to the other cells. After receiving the paging message for the MS5, the base station forwards the paging message to the other cells in the station through the air interface.

The signaling link on which the BSC sends the encapsulated paging message to the base station may be one or more in the 3 links of the CELL1-CELL3, or the 3 links are alternately used, or the links shares the load, or OML links are used, or self-defined links are used etc. In step S1302, the BSC sends the paging message by alternatively using the main B RSL link of the cell in the current base station.

The link optimization calculation when the paging messages are encapsulated according to the stations is shown as follows.

It is assumed that one station has 3 cells, and the length of the paging message is L bytes, before the paging messages are encapsulated, the length of the paging message of the link of the Abis interface is: L bytes/paging*3 pagings/station*1 station=3*L bytes. After the paging messages are encapsulated, the length of the paging messages of the link of the Abis interface is: L bytes/paging*1 paging/station*1 station=L bytes. It may be known that the load of the paging message of the Abis interface is changed to 33% of the original one.

As compared with the prior art that the BSC needs to send a paging message to every cell, in the method of encapsulating the paging messages into the packet, the BSC encapsulates the paging messages received form the MSC according to the stations, so that for the paging message sent from the MSC to the same subscriber, the BSC only needs to send a paging message to the base station, thereby decreasing the number of the paging messages sent on the paging link, and reducing the load of the downlink signaling link of the Abis interface.

In the method of encapsulating the paging messages into the packet according to the embodiment of the present invention, the two types of the encapsulating manners may be separately used or used together. For example, the received paging messages may be encapsulated firstly according to the cells and then according to the stations, that is, the BSC encapsulates the received paging messages firstly in the encapsulating manner according to the cells, and then encapsulates the paging messages encapsulated according to the cells in the encapsulating manner according to the stations.

Through the above description of the embodiments, it is apparent to those skilled in the art that the embodiments may be accomplished by hardware, and may also be implemented by software on a necessary universal hardware platform. Therefore, the technical solution of the present invention can be embodied in the form of a software product. The software product may be stored in a non-volatile storage medium (such as, a compact disk (CD)-read only memory (ROM), a U disk, and a mobile hard disk), and contain several instructions to instruct a computer equipment (such as, a personal computer, a server, or a network equipment) to perform the method as described in the embodiments of the present invention.

Although the invention being described as some preferred embodiments, the scope for which the protection is sought by the present invention is not limited thereby. Various modifications and variations without departing from the scope of the invention should be considered falling within the scope of the present invention.

## Claims

1. A method for encapsulating paging messages into a packet, comprising:
receiving (902), by a Base Station Controller, BSC, paging messages sent from a Mobile Switching Center, MSC;
encapsulating (905), by the BSC, the received paging messages into a packet; and
sending (906), by the BSC, the paging messages, encapsulated into the packet, to a base station;
**characterized in that** the process of encapsulating the received paging messages comprises:
encapsulating the received paging messages of a plurality of subscribers in a cell into the packet; and/or
encapsulating the received paging messages of a plurality of cells of a base station into the packet.

2. The method of claim 1, wherein the process of encapsulating the received paging messages is performed in response to a situation of a system load exceeding a preset load threshold value.

3. The method of claim 1, wherein the process of encapsulating the received paging messages further comprises:
encapsulating, the received paging messages, if it is judged that the received paging messages satisfy a preset encapsulating condition.

4. The method of claim 3, wherein the process of judging that the received paging messages satisfy the preset encapsulating condition further comprises:
judging that the number of the received paging messages reaches a maximum number of buffered paging messages; and/or
judging that the buffer time of the received paging messages reaches a longest time when paging messages are buffered in the BSC.

5. The method of claim 4, wherein after the process of sending the paging messages, encapsulated into the packet, to the base station, the method further comprises:
distributing, by the base station, the paging messages, encapsulated into the packet, to each cell of the base station.

6. A Base Station Controller, BSC, comprising:
a message receiving module (1), configured to receive paging messages sent from a Mobile Switching Center, MSC;
an encapsulating module (2), connected to the message receiving module (1) and configured to encapsulate the paging messages received by the message receiving module (2) and
a message sending module (3), connected to the encapsulating module (2) and configured to send the paging messages, processed by the encapsulating module (2), to a base station;
**characterized in that** the encapsulating module (2) further comprises:
a cell encapsulating sub-module (22), configured to encapsulate the paging messages of a plurality of subscribers in a cell into the packet; and/or
a station encapsulating sub-module (23), configured to encapsulate the paging messages of a plurality of cells of a base station into the packet.

7. The BSC of claim 6, wherein:
the BSC further comprises a load judging module, configured to judge whether a system load exceeds a preset load threshold value; and
if the load judging module judges that the current system load exceeds the preset load threshold value, the encapsulating module (2) is further configured to encapsulate the paging messages received by the message receiving module (1).

8. The BSC of claim 6, wherein:
the encapsulating module (2) further comprises a condition judging sub-module, connected to the cell encapsulating sub-module (22) and configured to judge whether the paging messages satisfy a preset paging message encapsulating condition; and
the cell encapsulating sub-module (22) is configured to encapsulate the paging messages received by the message receiving module (1) if the condition judging sub-module judges that the paging messages satisfy the preset paging message encapsulating condition.

9. The BSC of any one of claims 6-8, wherein:
the encapsulating module (2) further comprises a structure saving sub-module (24), configured to store a preset encapsulating structure which is applicable for the situation that the paging messages are encapsulated according to the cell or the base station.

10. A Base Station Subsystem, BSS, comprising:
the BSC of any one of claims 6-9, configured to receive paging messages sent from a Mobile Switching Center, MSC, encapsulate the received paging messages, and send the encapsulated paging messages to a base station of the BSS.

11. The BSS of claim 10, wherein:
the BSS further comprises a base station, configured to receive the encapsulated paging messages sent from the BSC, and distribute the paging messages to each cell of the base station.

## Patentansprüche

1. Verfahren zum Einkapseln von Funkrufnachrichten in ein Paket, wobei das Verfahren Folgendes umfasst:
Empfangen (902) durch eine Basisstations-Steuereinrichtung, BSC, von Funkrufnachrichten, die von einer Mobilvermittlungsstelle, MSC, gesendet werden;
Einkapseln (905) der empfangenen Funkrufnachrichten in ein Paket durch die BSC;
und
Senden (906) der in das Paket eingekapselten Funkrufnachrichten durch die BSC an eine Basisstation;
**dadurch gekennzeichnet, dass** der Prozess des Einkapselns der empfangenen Funkrufnachrichten Folgendes umfasst:
Einkapseln der empfangenen Funkrufnachrichten mehrerer Teilnehmer in einer Zelle in das Paket; und/oder
Einkapseln der empfangenen Funkrufnachrichten mehrerer Zellen einer Basisstation in das Paket.

2. Verfahren nach Anspruch 1, wobei der Prozess des Einkapselns der empfangenen Funkrufnachrichten als Reaktion auf eine Situation ausgeführt wird, in der eine Systemlast einen vorgegebenen Lastschwellenwert übersteigt.

3. Verfahren nach Anspruch 1, wobei der Prozess des Einkapselns der empfangenen Funkrufnachrichten ferner Folgendes umfasst:
Einkapseln der empfangenen Funkrufnachrichten, falls beurteilt wird, dass die empfangenen Funkrufnachrichten eine vorgegebene Einkapselungsbedingung erfüllen.

4. Verfahren nach Anspruch 3, wobei der Prozess des Beurteilens, dass die empfangenen Funkrufnachrichten die vorgegebene Einkapselungsbedingung erfüllen, ferner Folgendes umfasst:
Beurteilen, dass die Anzahl der empfangenen Funkrufnachrichten eine Maximalzahl der gepufferten Funkrufnachrichten erreicht; und/oder
Beurteilen, dass der Pufferzeitraum der empfangenen Funkrufnachrichten einen längsten Zeitraum erreicht, wenn die Funkrufnachrichten in der BSC gepuffert werden.

5. Verfahren nach Anspruch 4, wobei nach dem Prozess des Sendens der Funkrufnachrichten, die in das Paket eingekapselt sind, an die Basisstation das Verfahren ferner Folgendes umfasst:
Verteilen der in das Paket eingekapselten Funkrufnachrichten an jede Zelle der Basisstation durch die Basisstation.

6. Basisstations-Steuereinrichtung, BSC, die Folgendes umfasst:
ein Nachrichtenempfangsmodul (1), das konfiguriert ist, die von einer Mobilvermittlungsstelle, MSC, gesendeten Funkrufnachrichten zu empfangen;
ein Einkapselungsmodul (2), das mit dem Nachrichtenempfangsmodul (1) verbunden ist und konfiguriert ist, die durch das Nachrichtenempfangsmodul (2) empfangenen Funkrufnachrichten einzukapseln, und
ein Nachrichtensendemodul (3), das mit dem Einkapselungsmodul (2) verbunden ist und konfiguriert ist, die durch das Einkapselungsmodul (2) verarbeiteten Funkrufnachrichten an eine Basisstation zu senden;
**dadurch gekennzeichnet, dass** das Einkapselungsmodul (2) ferner Folgendes umfasst:
ein Zelleneinkapselungs-Untermodul (22), das konfiguriert ist, die Funkrufnachrichten mehrerer Teilnehmer in einer Zelle in das Paket einzukapseln; und/oder
ein Stationseinkapselungs-Untermodul (23), das konfiguriert ist, die Funkrufnachrichten mehrerer Zellen einer Basisstation in das Paket einzukapseln.

7. BSC nach Anspruch 6, wobei:
die BSC ferner ein Lastbeurteilungsmodul umfasst, das konfiguriert ist, zu beurteilen, ob eine Systemlast einen vorgegebenen Lastschwellenwert übersteigt; und
falls das Lastbeurteilungsmodul beurteilt, dass die momentane Systemlast den vorgegebenen Lastschwellenwert übersteigt, das Einkapselungsmodul (2) ferner konfiguriert ist, die durch das Nachrichtenempfangsmodul (1) empfangenen Funkrufnachrichten einzukapseln.

8. BSC nach Anspruch 6, wobei:
das Einkapselungsmodul (2) ferner ein Bedingungsbeurteilungs-Untermodul umfasst, das mit dem Zelleneinkapselungs-Untermodul (22) verbunden ist und konfiguriert ist, zu beurteilen, ob die Funkrufnachrichten eine vorgegebene Funkrufnachricht-Einkapselungsbedingung erfüllen; und
das Zelleneinkapselungs-Untermodul (22) konfiguriert ist, die durch das Nachrichtenempfangsmodul (1) empfangenen Funkrufnachrichten einzukapseln, falls das Bedingungsbeurteilungs-Untermodul beurteilt, dass die Funkrufnachrichten die vorgegebene Funkrufnachricht-Einkapselungsbedingung erfüllen.

9. BSC nach einem der Ansprüche 6-8, wobei:
das Einkapselungsmodul (2) ferner ein Struktursicherungs-Untermodul (24) umfasst, das konfiguriert ist, eine vorgegebene Einkapselungsstruktur zu speichern, die für die Situation anwendbar ist, in der die Funkrufnachrichten in Übereinstimmung mit der Zelle oder der Basisstation eingekapselt werden.

10. Basisstations-Untersystem, BSS, das Folgendes umfasst:
die BSC nach einem der Ansprüche 6-9, die konfiguriert ist, die von einer Mobilvermittlungsstelle, MSC, gesendeten Funkrufnachrichten zu empfangen, die empfangenen Funkrufnachrichten einzukapseln und die eingekapselten Funkrufnachrichten an eine Basisstation des BSS zu senden.

11. BSS nach Anspruch 10, wobei:
das BSS ferner eine Basisstation umfasst, die konfiguriert ist, die von der BSC gesendeten eingekapselten Funkrufnachrichten zu empfangen und die Funkrufnachrichten an jede Zelle der Basisstation zu verteilen.

## Revendications

1. Procédé d'encapsulation de messages de recherche en un paquet, comprenant :
la réception (902), par un Contrôleur de Station de Base, BSC, de messages de recherche envoyés par un Centre de Commutation Mobile, MSC ;
l'encapsulation (905), par le BSC, des messages de recherche reçus en un paquet ; et
l'envoi (906), par le BSC, des messages de recherche, encapsulés en paquet, à une station de base ;
**caractérisé en ce que** le processus d'encapsulation des messages de recherche reçus comprend :
l'encapsulation en paquet des messages de recherche reçus d'une pluralité d'abonnés se trouvant dans une cellule ; et/ou
l'encapsulation en paquet des messages de recherche reçus d'une pluralité de cellules d'une station de base.

2. Procédé selon la revendication 1, dans lequel le processus d'encapsulation des messages de recherche reçus est effectué en réponse à une situation lors de laquelle une charge du système dépasse une valeur de seuil prédéfinie de la charge.

3. Procédé selon la revendication 1, dans lequel le processus d'encapsulation des messages de recherche reçus comprend en outre :
l'encapsulation des messages de recherche reçus s'il est jugé que les messages de recherche reçus respectent une condition d'encapsulation prédéfinie.

4. Procédé selon la revendication 3, dans lequel le processus de jugement du fait que les messages de recherche reçus respectent la condition d'encapsulation prédéfinie comprend en outre :
le jugement du fait que le nombre de messages de recherche reçus atteint un nombre maximum de messages de recherche mis en tampon ; et/ou
le jugement du fait que le temps de mise en tampon des messages de recherche reçus atteint un temps le plus long lorsque des messages de recherche sont mis en tampon dans le BSC.

5. Procédé selon la revendication 4, dans lequel, après le processus d'envoi à la station de base des messages de recherche encapsulés en paquet, le procédé comprend en outre :
la distribution, par la station de base, des messages de recherche, encapsulés en paquet, à chaque cellule de la station de base.

6. Contrôleur de Station de Base, BSC, comprenant :
un module de réception de messages (1), configuré pour recevoir des messages de recherche envoyés par un Centre de Commutation Mobile, MSC ;
un module d'encapsulation (2), connecté au module de réception de messages (1) et
configuré pour encapsuler les messages de recherche reçus par le module de réception de messages (2) et
un module d'envoi de messages (3), connecté au module d'encapsulation (2) et
configuré pour envoyer à une station de base les messages de recherche traités par le module d'encapsulation (2) ;
**caractérisé en ce que** le module d'encapsulation (2) comprend en outre :
un sous-module d'encapsulation de cellule (22), configuré pour encapsuler en paquet les messages de recherche d'une pluralité d'abonnés présents dans une cellule ; et/ou un sous-module d'encapsulation de station (23), configuré pour encapsuler en paquet les messages de recherche d'une pluralité de cellules d'une station de base.

7. BSC selon la revendication 6, dans lequel :
le BSC comprend en outre un module de jugement de la charge, configuré pour juger si une charge du système dépasse une valeur de seuil prédéfinie de la charge ; et
si le module de jugement de la charge juge que la charge courante du système dépasse la valeur de seuil prédéfinie de la charge, le module d'encapsulation (2) est en outre configuré pour encapsuler les messages de recherche reçus par le module de réception de messages (1).

8. BSC selon la revendication 6, dans lequel :
le module d'encapsulation (2) comprend en outre un sous-module de jugement de condition, connecté au sous-module d'encapsulation de cellule (22) et configuré pour juger si les messages de recherche respectent une condition prédéfinie d'encapsulation de messages de recherche ; et
le sous-module d'encapsulation de cellule (22) est configuré pour encapsuler les messages de recherche reçus par le module de réception de messages (1) si le sous-module de jugement de condition juge que les messages de recherche respectent la condition prédéfinie d'encapsulation de messages de recherche.

9. BSC selon l'une quelconque des revendications 6 à 8, dans lequel :
le module d'encapsulation (2) comprend en outre un sous-module de sauvegarde de structure (24), configuré pour stocker une structure d'encapsulation prédéfinie qui peut s'appliquer à la situation dans laquelle les messages de recherche sont encapsulés conformément à la cellule ou à la station de base.

10. Sous-système de Station de Base, BSS, comprenant :
le BSC selon l'une quelconque des revendications 6 à 9, configuré pour recevoir des messages de recherche envoyés par un Centre de Commutation Mobile, MSC,
encapsuler les messages de recherche reçus, et envoyer les messages de recherche encapsulés à une station de base du BSS.

11. BSS selon la revendication 10, dans lequel :
le BSS comprend en outre une station de base, configurée pour recevoir les messages de recherche encapsulés envoyés par le BSC, et distribuer les messages de recherche à chaque cellule de la station de base.
